# EUROPEAN PATENT SPECIFICATION

(11) **EP 3 974 357 B1**
(45) Date of publication and mention of the grant of the patent: **18.11.2026**
(21) Application number: 21075006.3
(22) Date of filing: 01.06.2021
(51) Int. Cl.: B65G 69/28, F16M 11/04

(54) **LOADING AND UNLOADING PLATFORM WITH SUPPORT**
BE- UND ENTLADEPLATTFORM MIT STÜTZE
PLATE-FORME DE CHARGEMENT ET DE DÉCHARGEMENT AVEC SUPPORT

(30) Priority: 04.06.2020 NL 1043677
(43) Date of publication of application: 30.03.2022
(73) Proprietor: Hörmann Alkmaar BV, 1822 BB Alkmaar (NL)
(72) Inventor: LEVERING, Cornelis Gerardus, 1935 EP Egmond-Binnen (NL); STROET, Franciscus Johannes, 1704 WL Heerhugowaard (NL); GEERLIGS, Bastiaan Johan Dinand, 1744 KH Sint Maarten (NL)
(74) Representative: Koomen, M.J.I.

(56) References cited:
- US-A- 3 655 161
- US-A1- 2018 135 269
- US-B1- 10 288 213

## Description

The present invention relates to a loading and unloading platform.

A loading and unloading platform is a provision at or in the hall of a building, for example a distribution center, where a truck can load and unload. It comprises a platform with a bridge plate or dock leveler therein to bridge a difference in height and distance between a loading platform and the floor of a truck. Often the platform with the bridge plate or dock leveler is taken up within the hall of the building.

Sometimes it is not possible to install a loading and unloading platform within the hall of a building. In such a case the platform with the bridge plate can be positioned outside the building in front of the hall. A loading and unloading platform that is positioned outside in front of the hall can further be provided with two walls that are placed on platform parts at both sides of the bridge plate, a roof and at the front side a dock shelter. In such a case one speaks of a dock house.

A loading and unloading platform that is positioned outside in front of a building rests on two or more supports or legs, that are connected at the lower side onto the driveway by means of a foot and at the upper side are connected to or underneath the platform, or to or underneath a supporting structure onto which the platform with the bridge plate or dock leveler rests. The platform or the supporting structure in this way is fixedly connected onto the driveway.

It happens that the driveway is susceptible to movements relative to the building. This for example occurs with distribution centers provided with a storey, whereby the floor of the storey is susceptible to horizontal movements with respect to the building. In this situation it is not advisable to fasten the loading and unloading platform fixedly to the floor of the storey.

It is known to support, in that situation, the supporting structure of the loading and unloading platform, for example that of a dock house, by supports with feet that are provided with a steel plate, that is slidable onto an underground, by means of which the movements of the floor can be absorbed.

This construction has the drawback that the loading and unloading platform during strong wind or under vertical forces by a docked truck can be raised or "lifted".

From US 10 288 213 B1, disclosing the features of the preamble of claim 1, is known a support for a bridge plate ("dock plate") of a loading and unloading platform. It comprises a stanchion that stands on a pedestal on the ground. On top of the stanchion a dock head is provided with on top of that a plate ("prop plate") for supporting the bridge plate underneath. The dock head is mounted to the stanchion by means of an adjustable joint, which allows for the dock head to be tilted relative to the center axis of the stanchion and thereby also the cant of the plate can be adjusted to that of the bridge plate, so that the prop plate physically contacts the bridge plate underneath.

The support according to this publication provides for the stanchion to be adjustable in height, and further provides for the cant of the prop plate to be variable relative to the center axis of the stanchion. It does however not provide for the upper part of the support to be shiftable or slidable relative to the lower part of the support. Further, it does not disclose for the upper part of the support to be connected to or underneath the construction, and therefore the drawback of the possibility of lifting of the construction under wind or vertical forces remains.

The invention aims to obviate this drawback of the known loading and unloading platform.

The loading and unloading platform according to the invention as defined in claim 1 to that end is characterized, in that the cover part, the supporting part lower part, arid in the foot upper part a lead-through opening is provided through which a fastening means is led, such as a bolt, and whereby the lower side of the cover part, the upper side and the lower side of the supporting part lower part, and the upper side of the foot upper part are flat, plate or disc shaped, such that the supporting part lower part is movable, shiftable or slidable with respect to the cover part and the foot upper part, whereby the diameter of the lead-through opening in the supporting part lower part is substantially larger than the diameter of the lead-through opening in the foot upper part, such, that the fastening means limits the path of movement of the supporting part lower part relative to the foot upper part.

According to a characteristic of the loading and unloading platform according to the invention, the diameter of the cover part is larger than the diameter of the lead-through opening in the supporting part lower part.

According to another characteristic of the loading and unloading platform according to the invention the lower side of the supporting part lower part and/or the upper side of the foot upper part, and/or the lower side of the cover part and/or the upper side of the supporting part lower part are provided with a material that improves the possibility of the before-mentioned parts to shift or slide relative to each other.

According to a further characteristic of the loading and unloading platform according to the invention, the lower side of the supporting part lower part and/or the upper side of the foot upper part, and/or the lower side of the cover part and/or the upper side of the supporting part lower part, are provided with a Teflon layer.

According to another characteristic of the loading and unloading platform according to the invention in between the lower side of the supporting part lower part and the upper side of the foot upper part a plate or disc is provided with a lead-through opening for the fastening means, which is made from a material having a low friction coefficient, more in particular a Teflon material.

According to yet another characteristic of the loading and unloading platform according to the invention, the diameter of the lead-through opening in the plate or disc is larger than the one in the foot upper part, but substantially smaller than the diameter of the lead-through opening in the supporting part lower part.

Further characteristics and features of the loading and unloading platform according to the invention will be described with reference to the drawings of two examples of embodiments.

Figure 1 shows a perspective view of a platform such as is part of a loading and unloading platform, whereby the platform is supported by a beam that is supported at both sides by an example of an embodiment of two supports according to the invention.

The figures 2a and 2b show a perspective view of an example of an embodiment of a support as can be applied with the loading and unloading platform according to the invention, whereby, in figure 2b, the support is shown taken apart.

The figures 3a and 3b show a perspective view of a further example of an embodiment of a support as can be applied with the invention, whereby, in figure 3b, the support is shown taken apart.

The figures 4a and 4b show a side view, the figures 4c and 4d a front view, of an example of an embodiment of a support as applied with a loading and unloading platform according to the invention, with partially shown the supporting structure with supporting beam for the platform with bridge plate.

The figures 5a, 5b and 5c show in section a front view of an example of an embodiment of the support.

The figures 6a, 6b, 6c, 6d and 6e show in section a front view of the example of the embodiment of the support as applied with the invention, with in the figures 6a up to and including 6c partially taken apart views.

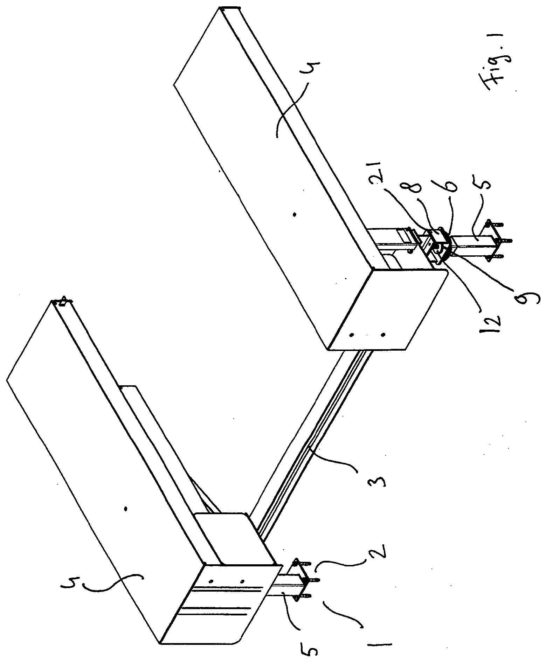

As can be seen in figure 1, the support 1 for the supporting onto an underground, such as a driveway 2 or a bridge road, of the supporting structure 3 of the platform 4 of the loading and unloading platform according to the invention comprises a foot 5 that is to be mounted onto the driveway 2. The foot 5 is formed by a base part 5a, which is fixedly mounted to the driveway, and a top part 5b that is to be adjusted at the site at the correct height and that is connected to the base part 5a by means of welding.

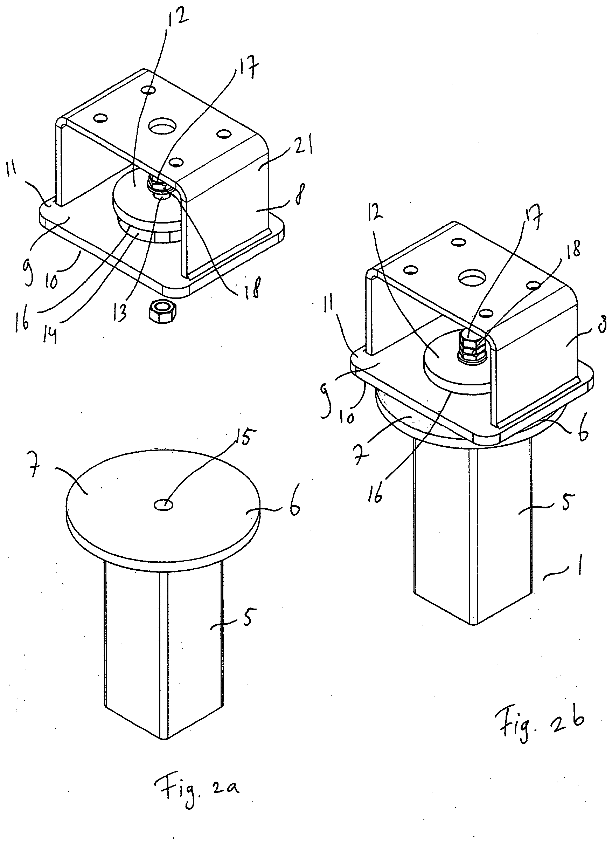

As can be seen in the example of an embodiment of the invention shown in figures 2a and 2b the foot 5 is provided with a foot upper part 6 with an upper side 7. It further comprises a supporting part 8, that is to be connected to or underneath the supporting structure. The supporting part 8 is provided with a supporting part lower part 9 having a lower side 10 and an upper side 11. The supporting part 8 at the lower side 10 of the supporting part lower part 9 is provided onto the upper side 7 of the foot upper part 6 of the foot 5 (figure 2b). As can be seen in figure 2b onto the upper side 11 of the supporting part lower part 9 a cover part 12 is provided. As can be seen in figure 2a in the cover part 12 a lead-through opening 13 is provided, in the supporting part lower part 9 a lead-through opening 14 is provided, and in the foot upper part 6 a lead-through opening 15 is provided, through all of which lead-through openings 13, 14, 15 a fastening means 17 is led, such as the bolt 17 with ring and nuts 18, by means of which the cover part 12, the supporting part lower part 9 and the foot upper part 6 are fastened to each other. The supporting part 8 at the upper side of the supporting part lower part 9 is provided with an upside down U-profile 21, onto which the support structure 3 of the platform rests (figure 1).

As can be seen in the figures 2a and 2b the lower side 16 of the cover part 12, the upper side 11 and the lower side 10 of the supporting part lower part 9, and the upper side 7 of the foot upper part 6 are flat or level shaped, such that the supporting part lower part 9 is shiftable or slidable with respect to the lower side 16 of the cover part 12 and the upper side 7 of the foot upper part 6. In a favourable manner to that end the lower side 10 of the supporting part lower part 9 and/or the upper side 7 of the foot upper part 6, and/or the lower side 16 of the cover part 12 and/or the upper side 11 of the supporting part lower part 9 are provided with a material, that improves the possibility of the before-mentioned sides to shift or slide relative to each other, such as a Teflon layer.

The diameter of the lead through opening 14 in the supporting part lower part 9 is substantially larger than the diameter of the lead-through opening 15 in the foot upper part 6, such, that the supporting part lower part 9 with the supporting part 8 is movable horizontally in all directions relative to the foot 5 and the cover part 12. Thereby the path of movement in these several horizontal directions of the supporting part lower part 9 relative to the foot upper part 6 and the cover part 12 is limited by the bolt 17.

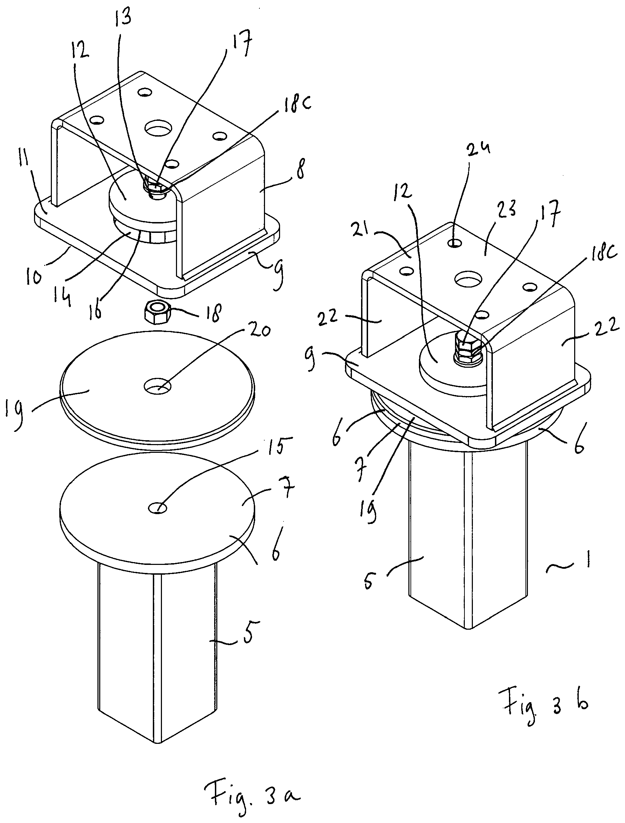

In the figures 3a and 3b and following a further example of an embodiment of a support such as applied with the loading and unloading platform according to the invention is shown. In this embodiment in between the lower side 10 of the supporting part lower part 9 and the upper side 7 of the foot upper part 6 a Teflon disc 19 is provided. The disc 19 is provided with a lead-through opening 20 for the bolt 17. The diameter of the lead-through opening 20 in the disc 19 is substantially smaller than the diameter of the lead-through opening 14 in the supporting part lower part 9, such, that the supporting part lower part 9 with the supporting part 8 is movable horizontally in all directions relative to the disc 19, the foot 5 and the cover part 12.

The supporting part 8 at the upper side of the supporting part lower part 9 is provided with an upside down U-profile 21. The distance between the legs 22 of the profile 21 is larger than the diameter of the cover part 12. The back 23 of the U-profile is provided with openings 24 for the lead-through of means for the fastening of the U-profile 21 to the supporting structure 3 for the platform 4.

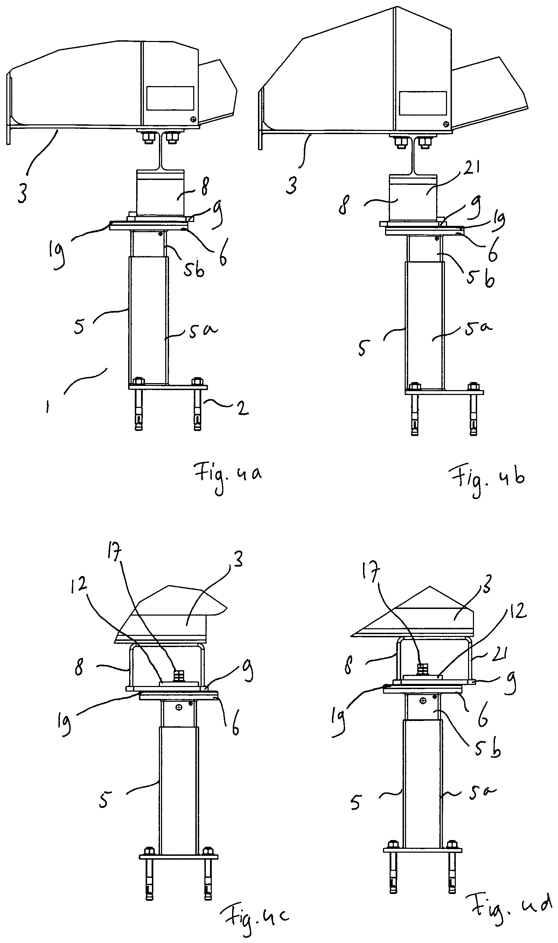

In the figures 4a, 4b, 4c and 4d it can be seen that the combination of the foot 5 with the cover part 12 and the Teflon disc 19 is movable horizontally in various directions relative to the combination of the supporting part lower part 9 with the supporting part 8 and the U-profile 21 and the support structure 3 of the loading and unloading platform.

By means of this movability in horizontal direction of the foot 5 , that is connected to the underground or driveway, relative to the supporting structure 3 with on it the platform 4 it is achieved, that possible movements of the driveway can take place without forcing the support structure 3 and with that the platform 4 to move along with it.

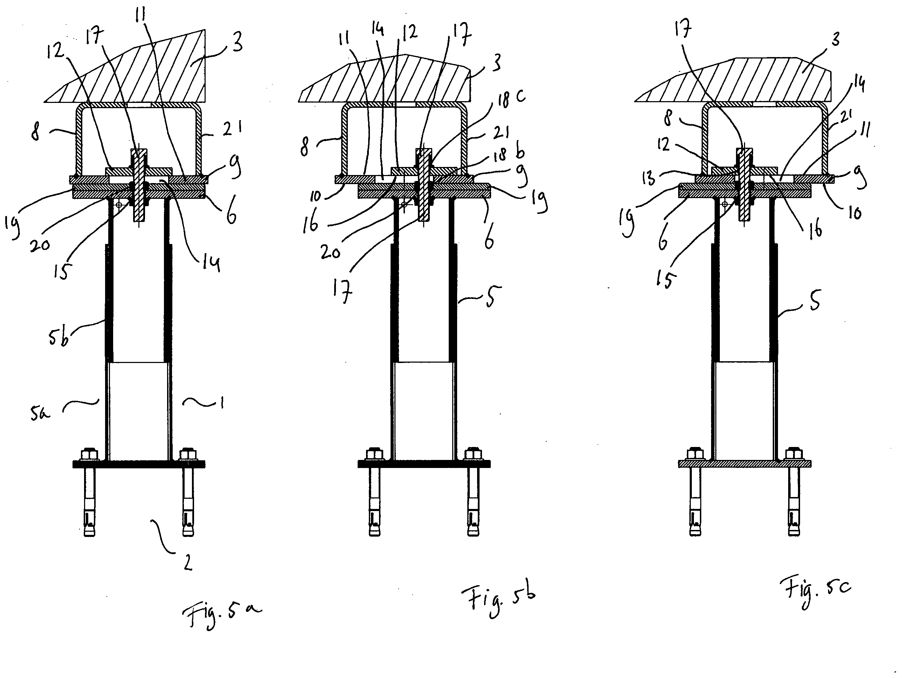

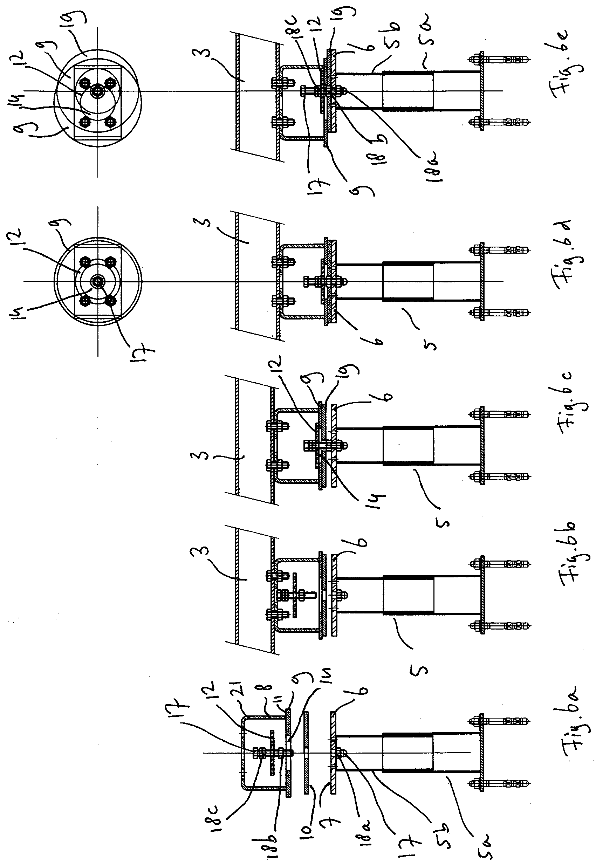

In the section views shown in figures 5a, 5b and 5c and in the figures 6d and 6e it can also be seen that the combination of the foot 5 and the cover part 12 with the Teflon disc 19, on the one hand, is, horizontally, movable from the starting position shown in figure 5a, to a position to the right with respect to the combination of the supporting part lower part 9 with the supporting part 8 with on it the U-profile 21, onto which the support structure 3 with the loading and unloading platform rests, as shown in figure 5b, and to a position to the left with respect to the combination of the supporting part lower part 9 with the supporting part 8 with on it the U-profile 21, as shown in figure 5c. With this it is achieved, that any possible movements in various directions of the driveway 2 relative to the building can be absorbed and neutralized.

By means of the cover part 12, which has a diameter that is larger than the diameter of the lead-through opening 14 in the supporting part lower part 9 it is prevented that the support structure with the loading and unloading platform, for instance because of wind, is raised or "lifted" from the underground, such as the driveway.

As can be seen in the figures 3a and 3b, the figures 5a, 5b and 5c and the figures 6a, 6b, 6c, 6d and 6e the bolt 17 is led through the lead-through openings 13, 14, 20 respectively 15 in the cover part 12, the supporting part lower part 9, the disc 19 respectively the foot upper part 6. There are provided three separate nuts. Nut 18a (figure 6e) is welded tight. The bolt 17 is fastened in nut 18a. Nut 18b locks the bolt 17. There are two nuts 18c which provide for the disc 19 or sliding plate 19 to get just enough play to be able to slide, but to not be clamped.

Thereby the path of movement in these various horizontal directions (see the figures 5a, 5b, 5c and 6e) of the supporting part lower part 9 relative to the disc 19 or sliding plate 19, the foot upper part 6 and the cover part 12, is limited by the bolt 17.

## Claims

1. Loading and unloading platform, more in particular a loading and unloading platform that can be positioned outside in front of a hall of a building, such as a dock house, comprising a platform (4) with a bridge plate or dock leveler therein to bridge a difference in height and distance between a loading platform and the floor of a truck, provided with at least one support (1) or leg for supporting of the platform (4) or of a supporting structure (3) for the platform (4) onto an underground, such as a driveway (2) or bridge road, which support comprises a base or foot (5) that is to be mounted onto the driveway (2) or bridge road, wherein this is provided with a foot upper part (6) having an upper side (7), and further comprises a supporting part (8) that is to be connected to or underneath the platform (4) or the supporting structure (3). which supporting part (8) is provided with a supporting part lower part (9) having a lower side (10) and an upper side (11), whereby the supporting part (8) at the lower side (10) of the supporting part lower part (9) is provided onto the upper side (7) of the foot upper part (6) of the foot (5), whereby onto the upper side (11) of the supporting part lower part (9) a cover part (12) is provided, **characterized in that** in the cover part (12), the supporting part lower part (9), and in the foot upper part (6) a lead-through opening (13, 14, 15) is provided through which a fastening means (17) is led, such as a pin or bolt (17), and whereby the lower side (16) of the cover part (12) , the upper side (11) and the lower side (10) of the supporting part lower part (9). and the upper side (7) of the foot upper part (6) are flat, plate or disc shaped, such that the supporting part lower part (9) is movable, slidable or shiftable with respect to the cover part (12) and the foot upper part (6), whereby the diameter of the lead-through opening (14) in the supporting part lower part (9) is substantially larger than the diameter of the lead-through opening (15) in the foot upper part (6), such, that the fastening means (17) limits the path of movement of the supporting part lower part (9) relative to the foot upper part (6).

2. Loading and unloading platform according to claim 1, **characterized in that** the diameter of the cover part (12) is larger than the diameter of the lead-through opening (14) in the supporting part lower part (9).

3. Loading and unloading platform according to claim 1 or 2, **characterized in that** the lower side (10) of the supporting part lower part (9) and/or the upper side (7) of the foot upper part (6) and the lower side (16) of the cover part (12) and/or the upper side (11) of the supporting part lower part (9) are provided with a material, that improves the possibility of the before-mentioned parts to shift or slide relative to each other.

4. loading and unloading platform according to claim 1, 2 or 3, **characterized in that** the lower side (10) of the supporting part lower part (9) and/or the upper side (7) of the foot upper part (6), and/or the lower side (16) of the cover part (12) and/or the upper side (11) of the supporting part lower part (9) are provided with a Teflon layer.

5. Loading and unloading platform according to claim 1, **characterized in that** in between the lower side (10) of the supporting part lower part (9) and the upper side (7) of the foot upper part (6) a plate (19) or disc (19) is provided with a lead-through opening (20) for the fastening means (17), which is made from a material having a low friction coefficient.

6. Loading and unloading platform according to claim 5, **characterized in that** the material is Teflon.

7. Loading and unloading platform according to claim 5 or 6, **characterized in that** the diameter of the lead-through opening (20) in the plate (19) or disc (19) is larger than the one (15) in the foot upper part (6), but is substantially smaller than the diameter of the lead-through opening (14) in the supporting part lower part (9).

8. Loading and unloading platform according to claim 7, **characterized in that** the fastening means (17) is provided with at least one nut (18b) at the location of the lead-through opening (20) in the disc (19), the height of which nut (18b) partially extends to into the lead-through opening (14) in the supporting part lower part (9).

9. Loading and unloading platform according to one of the preceding claims, **characterized in that** the supporting part (8) at the upper side (11) of the supporting part lower part (9) is provided with an upside down U-profile (21), whereby the distance between the legs (22) of the profile is larger than the diameter of the cover part (12).

10. Loading and unloading platform according to claim 10, **characterized in that** the back (23) of the U-profile (21) is provided with openings (24) for the lead-through of means for the fastening of the back to the supporting structure (3).

## Patentansprüche

1. Be- und Entladeplattform, insbesondere Be- und Entladeplattform, die außerhalb vor einer Halle eines Gebäudes, wie eines Dockhauses, positioniert werden kann, umfassend eine Plattform (4) mit einer Brückenplatte oder einem Docknivellierer darin, um eine Differenz in Höhe und Abstand zwischen einer Ladeplattform und dem Boden eines Lastkraftwagens zu überbrücken, die mit mindestens einer Stütze (1) oder einem Bein zum Stützen der Plattform (4) oder einer Stützstruktur (3) für die Plattform (4) auf einem Untergrund, wie einer Fahrbahn (2) oder einer Brückenstraße, versehen ist, wobei die Stütze eine Basis oder einen Fuß (5) umfasst, der auf der Fahrbahn (2) oder der Brückenstraße montiert werden soll, wobei diese mit einem Fußoberteil (6) mit einer Oberseite (7) versehen ist und ferner ein Stützteil (8) umfasst, das mit oder unter der Plattform (4) oder der Stützstruktur (3) verbunden werden soll, wobei das Stützteil (8) mit einem Stützteilunterteil (9) mit einer Unterseite (10) und einer Oberseite (11) versehen ist, wobei das Stützteil (8) an der Unterseite (10) des Stützteilunterteils (9) an der Oberseite (7) des Fußoberteils (6) des Fußes (5) vorgesehen ist, wobei an der Oberseite (11) des Stützteilunterteils (9) ein Abdeckteil (12) vorgesehen ist, **dadurch gekennzeichnet, dass** in dem Abdeckteil (12) das Stützteilunterteil (9), und in dem Fußoberteil (6) eine Durchführöffnung (13, 14, 15) vorgesehen ist, durch die ein Befestigungsmittel (17), wie beispielsweise ein Stift oder Bolzen (17), geführt ist, und wobei die Unterseite (16) des Abdeckteils (12), die Oberseite (11) und die Unterseite (10) des Stützteilunterteils (9) und die Oberseite (7) des Fußoberteils (6) flach, plattenförmig oder scheibenförmig sind, so dass das Stützteilunterteil (9) gegenüber dem Abdeckteil (12) und dem Fußoberteil (6) bewegbar, verschiebbar oder verschiebbar ist, wobei der Durchmesser der Durchgangsöffnung (14) in dem Stützteilunterteils (9) wesentlich größer ist als der Durchmesser der Durchgangsöffnung (15) in dem Fußoberteil (6), so dass das Befestigungsmittel (17) den Bewegungsweg des Stützteilunterteils (9) relativ zu dem Fußoberteil (6) begrenzt.

2. Lade- und Entladeplattform nach Anspruch 1, **dadurch gekennzeichnet, dass** der Durchmesser des Abdeckteils (12) größer ist als der Durchmesser der Durchgangsöffnung (14) im Stützteilunterteil (9).

3. Be- und Entladeplattform nach Anspruch 1 oder 2, **dadurch gekennzeichnet, dass** die Unterseite (10) des Stützteilunterteil (9) und/oder die Oberseite (7) des Fußoberteils (6) und die Unterseite (16) des Abdeckteils (12) und/oder die Oberseite (11) des Stützteilunterteil (9) mit einem Material versehen sind, das die Möglichkeit verbessert, dass sich die zuvor genannten Teile relativ zueinander verschieben oder verschieben.

4. Be- und Entladeplattform nach Anspruch 1, 2 oder 3, **dadurch gekennzeichnet, dass** die Unterseite (10) des Stützteilunterteil (9) und/oder die Oberseite (7) des Fußoberteils (6 ) und/oder die Unterseite (16) des Abdeckteils (12) und/oder die Oberseite (11) des Stützteilunterteil (9) mit einer Teflonschicht versehen sind.

5. Lade- und Entladeplattform nach Anspruch 1, **dadurch gekennzeichnet, dass** Zwischen der Unterseite (10) des Stützteilunterteil (9) und der Oberseite (7) des Fußoberteils (6) eine Platte (19) oder Scheibe (19) mit einer Durchgangsöffnung (20) für das Befestigungsmittel (17) versehen ist, die aus einem Material mit einem niedrigen Reibungskoeffizienten hergestellt ist.

6. Lade- und Entladeplattform nach Anspruch 5, **dadurch gekennzeichnet, dass** das Material Teflon ist.

7. Be- und Entladeplattform nach Anspruch 5 oder 6, **dadurch gekennzeichnet, dass** der Durchmesser der Durchgangsöffnung (20) in der Platte (19) oder Scheibe (19) größer ist als der (15) im Fußoberteil (6), aber wesentlich kleiner als der Durchmesser der Durchgangsöffnung (14) im Stützteilunterteil (9).

8. Lade- und Entladeplattform nach Anspruch 7, **dadurch gekennzeichnet, dass** das Befestigungsmittel (17) an der Stelle der Durchgangsöffnung (20) in der Scheibe (19) mit mindestens einer Mutter (18b) versehen ist, deren Höhe sich teilweise bis in die Durchgangsöffnung (14) im Stützteilunterteil (9) erstreckt.

9. Be- und Entladeplattform nach einem der vorhergehenden Ansprüche, **dadurch gekennzeichnet, dass** das Stützteil (8) an der Oberseite (11) des Stützteilunterteil (9) mit einem kopfüberliegenden U-Profil (21) versehen ist, wobei der Abstand zwischen den Schenkeln (22) des Profils größer ist als der Durchmesser des Abdeckteils (12).

10. Lade- und Entladeplattform nach Anspruch 10, **dadurch gekennzeichnet, dass** die Rückseite (23) des U-Profils (21) mit Öffnungen (24) zur Durchführung von Mitteln zur Befestigung der Rückseite an der Tragstruktur (3) versehen ist.

## Revendications

1. - Plateforme de chargement et de déchargement, plus particulièrement plateforme de chargement et de déchargement qui peut être positionnée à l'extérieur devant un hall d'un bâtiment, tel qu'un abri de quai, comprenant une plateforme (4) avec une plaque de pont ou un niveleur de quai dans celle-ci pour compenser une différence de hauteur et de distance entre une plateforme de chargement et le plancher d'un camion, comportant au moins un support (1) ou une jambe destiné(e) à supporter la plateforme (4) ou une structure de support (3) pour la plateforme (4) sur un sous-sol, tel qu'une allée (2) ou une passerelle routière , lequel support comprend une base ou pied (5) qui est destiné à être monté sur l'allée (2) ou la passerelle routière, celui-ci comportant une partie supérieure de pied (6) ayant un côté supérieur (7), et comprenant en outre une partie de support (8) qui est destinée à être reliée à ou sous la plateforme (4) ou la structure de support (3), laquelle partie de support (8) comporte une partie inférieure de partie de support (9) ayant un côté inférieur (10) et un côté supérieur (11), la partie de support (8) au côté inférieur (10) de la partie inférieure de partie de support (9) étant disposée sur le côté supérieur (7) de la partie supérieure de pied (6) du pied (5), une partie de recouvrement (12) étant disposée sur le côté supérieur (11) de la partie inférieure de partie de support (9),
**caractérisée par le fait que**
dans la partie de recouvrement (12), la partie inférieure de partie de support (9), et dans la partie supérieure de pied (6), une ouverture de passage (13, 14, 15) est pratiquée à travers laquelle est conduit un moyen de fixation (17), tel qu'une broche ou un boulon (17), et le côté inférieur (16) de la partie de recouvrement (12), le côté supérieur (11) et le côté inférieur (10) de la partie inférieure de partie de support (9), et le côté supérieur (7) de la partie supérieure de pied (6) étant plats, en forme de plaque ou de disque, de telle sorte que la partie inférieure de partie de support (9) est mobile, coulissante ou déplaçable par rapport à la partie de recouvrement (12) et à la partie supérieure de pied (6), le diamètre de l'ouverture de passage (14) dans la partie inférieure de partie de support (9) étant sensiblement plus grand que le diamètre de l'ouverture de passage (15) dans la partie supérieure de pied (6), de telle sorte que le moyen de fixation (17) limite la course de déplacement de la partie inférieure de partie de support (9) par rapport à la partie supérieure de pied (6).

2. - Plateforme de chargement et de déchargement selon la revendication 1, **caractérisée par le fait que** le diamètre de la partie de recouvrement (12) est supérieur au diamètre de l'ouverture de passage (14) dans la partie inférieure de partie de support (9).

3. - Plateforme de chargement et de déchargement selon la revendication 1 ou 2, **caractérisée par le fait que** le côté inférieur (10) de la partie inférieure de partie de support (9) et/ou le côté supérieur (7) de la partie supérieure de pied (6) et le côté inférieur (16) de la partie de recouvrement (12) et/ou le côté supérieur (11) de la partie inférieure de partie de support (9) comportent un matériau qui améliore la possibilité des parties susmentionnées à se déplacer ou à coulisser l'une par rapport à l'autre.

4. - Plateforme de chargement et de déchargement selon la revendication 1, 2 ou 3, **caractérisée par le fait que** le côté inférieur (10) de la partie inférieure de partie de support (9) et/ou le côté supérieur (7) de la partie supérieure de pied (6), et/ou le côté inférieur (16) de la partie de recouvrement (12) et/ou le côté supérieur (11) de la partie inférieure de partie de support (9) comportent une couche de Téflon.

5. - Plateforme de chargement et de déchargement selon la revendication 1, **caractérisée par le fait qu'**entre le côté inférieur (10) de la partie inférieure de partie de support (9) et le côté supérieur (7) de la partie supérieure de pied (6) est disposé une plaque (19) ou un disque (19) ayant une ouverture de passage (20) pour le moyen de fixation (17), qui est réalisé dans un matériau présentant un faible coefficient de frottement.

6. - Plateforme de chargement et de déchargement selon la revendication 5, **caractérisée par le fait que** le matériau est le Téflon.

7. - Plateforme de chargement et de déchargement selon la revendication 5 ou 6, **caractérisée par le fait que** le diamètre de l'ouverture de passage (20) dans la plaque (19) ou le disque (19) est supérieur à celui (15) de la partie supérieure de pied (6), mais est sensiblement inférieur au diamètre de l'ouverture de passage (14) dans la partie inférieure de partie de support (9).

8. - Plateforme de chargement et de déchargement selon la revendication 7, **caractérisée par le fait que** le moyen de fixation (17) comporte au moins un écrou (18b) à l'emplacement de l'ouverture de passage (20) dans le disque (19), la hauteur de cet écrou (18b) s'étendant partiellement jusque dans l'ouverture de passage (14) dans la partie inférieure de partie de support (9).

9. - Plateforme de chargement et de déchargement selon l'une des revendications précédentes, **caractérisée par le fait que** la partie de support (8) au côté supérieur (11) de la partie inférieure de partie de support (9) comporte un profilé en U inversé (21), la distance entre les jambes (22) du profilé étant supérieure au diamètre de la partie de recouvrement (12).

10. - Plateforme de chargement et de déchargement selon la revendication 10, **caractérisée par le fait que** le dos (23) du profilé en U (21) comporte des ouvertures (24) destinées au passage de moyens de fixation du dos à la structure de support (3).
